(19) **Europäisches Patentamt**
**European Patent Office**
**Office européen des brevets**

(11) **EP 4 123 519 B1**

(12) **EUROPEAN PATENT SPECIFICATION**

(45) Date of publication and mention
of the grant of the patent:
**11.02.2026 Bulletin 2026/07**

(21) Application number: **21187378.1**

(22) Date of filing: **23.07.2021**

(51) International Patent Classification (IPC):
***G06N 20/20*** (2019.01)

(52) Cooperative Patent Classification (CPC):
**G06N 20/20**

(54) **SYSTEM AND COMPUTER-IMPLEMENTED METHOD FOR DYNAMIC ADAPTION OF AUTOMOTIVE FUNCTIONS**

SYSTEM UND COMPUTERIMPLEMENTIERTES VERFAHREN ZUR DYNAMISCHEN ANPASSUNG VON KRAFTFAHRZEUGFUNKTIONEN

SYSTÈME ET PROCÉDÉ MIS EN OEUVRE PAR ORDINATEUR PERMETTANT L'ADAPTATION DYNAMIQUE DES FONCTIONS AUTOMOBILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.01.2023 Bulletin 2023/04**

(73) Proprietor: **Bayerische Motoren Werke Aktiengesellschaft**
**80809 München (DE)**

(72) Inventor: **Harth, Natascha**
**80804 München (DE)**

(56) References cited:
• **AHMED USMAN ET AL: "A Transaction Classification Model of Federated Learning", 19 July 2021, COMPUTER VISION - ECCV 2020 : 16TH EUROPEAN CONFERENCE, GLASGOW, UK, AUGUST 23-28, 2020 : PROCEEDINGS; PART OF THE LECTURE NOTES IN COMPUTER SCIENCE ; ISSN 0302-9743; [LECTURE NOTES IN COMPUTER SCIENCE; LECT.NOTES COMPUTER], SPRINGER INTERNATIONAL PU, ISBN: 978-3-030-58594-5, XP047603462**

• **ZHANG HONGYI ET AL: "Real-time End-to-End Federated Learning: An Automotive Case Study", 2021 IEEE 45TH ANNUAL COMPUTERS, SOFTWARE, AND APPLICATIONS CONFERENCE (COMPSAC), IEEE, 12 July 2021 (2021-07-12), pages 459 - 468, XP033970286, DOI: 10.1109/COMPSAC51774.2021.00070**

• **DU ZHAOYANG ET AL: "Federated Learning for Vehicular Internet of Things: Recent Advances and Open Issues", IEEE OPEN JOURNAL OF THE COMPUTER SOCIETY, IEEE, vol. 1, 5 May 2020 (2020-05-05), pages 45 - 61, XP011795454, DOI: 10.1109/OJCS.2020.2992630**

**Description**

The present invention relates to a system and computer-implemented method for improving the efficiency and security in dynamic adaption of automotive functions.

In modern vehicular environments, sensor date, image data, audio data etc. from an environment of a vehicle and a vehicle cabin are accessed and processed in order to provide intelligent vehicle functions and to enhance data management of the vehicle. In order to efficiently and reliably process the above-mentioned data, huge amounts of a plurality of vehicles need to be processed. Such an environment of data generated by a plurality of vehicles that comprise context-aware, real-time systems in the sense of ubiquitous computing, can be summarized as real-time distributed system. The transmission of the generated data towards the Backend for generating intelligent vehicle functions is even with the use of new technologies in mobile networks (e.g. 5G) costly and requires enormous storage and processing power. Therefore in-vehicle processing is required and efficient transferring of data needed. Moreover, due to the increase of in-vehicle applications and due to the fact that data accessed comprises sensitive, personal data, there is a need to perform data computation, data analytics and machine-learning near the data source - in the sense of Edge Computing - rather than by a Backend - in the sense of Cloud Computing. Each vehicle can be considered to represent an edge device in the sense of Edge Computing. In order to preserve data privacy, it is known to apply Federated Learning.

From the article "A Transaction Classification Model of Federated Learning" [Ahmed Usman et.al.; Computer Vision - ECCV 2020: 16th European Conference, Glasgow, UK; ISBN: 978-3-030-58594-5] a Federated Learning is illustrated by the example of a server-client structure for shops (= local clients) in a city for modelling a supply and demand analysis. Each client is provided with both a generalized model and a local own-iterative model for a training phase, and the client then ultimately makes a true choice for one of the models.

Federated Learning has been introduced within the context of Edge Computing, aiming to solve edge learning under privacy sensitive, non-independent and identically distributed (non-i.i.d.), and unbalanced data generated from massively distributed devices using the technique of machine learning. For example, from the article "Real-time End-to-End Federated Learning" [Hongyi Zhang et.al.; 45th Annual Computers, Software and Applications Conference (COMPSAC)] one gets taught how to improve Federated Learning. Starting from the Machine Learning Approach, which conducts model training on a single central server the learning process shall be improved by means of an asynchronous decentralized learning process. In a first process phase the model is trained to converge by several iterations carried out between a local client and a server to find a final model state. After that, the client may select then the best model for each iteration to be provided with the actual, local hold out data.

Federated Learning within this document is also a machine learning setting where multiple entities (clients) collaborate in solving a machine learning problem, under the coordination of a central server or service provider. Each client's raw data is stored locally and not exchanged or transferred; instead, focused updates intended for immediate aggregation are used to achieve the learning objective. The main drawback of Federated Learning in the context of an automotive application is, that the learning model according to Federated Learning is at some point considered to be optimized. However, vehicles as edge devices are highly dynamic and the data changes dynamically with the dynamic vehicle environment and vehicle interior situation. Therefore, the model can never be considered to be optimized. Moreover, for intelligent vehicle functions and around the autonomous driving context, the usage of personal and local behaviour adaption of the model is of high importance. Mainly because a generalized model from the Backend cannot provide the most accurate and best qualitative results a personal adapted model can do, towards the individual local environment the vehicle is placed at.

It is an object of the present invention to overcome the above-mentioned drawbacks by providing a solution that enables a dynamic, efficient and secure adaptation of automotive functions.

This problem is solved by the independent claims 1 and 3. Preferred embodiments are described in the dependent claims 2 and 4, respectively.

The Backend comprises a generalized federated model $f_{FL}$ deployed thereon. The System can be an Edge Computing System where Federated Learning is applied at the Backend. Within this application, an Edge Computing System is a distributed system where different entities are connected to communicate with each other forming a network. Throughout this document, Edge Computing can be understood as processing the data at an Internet of Things (IoT)-device level. IoT is a ubiquitous computing paradigm in which everyday objects, e.g. vehicles, are enriched with embedded computational power towards monitoring the environment by collecting data without any user interaction in real-time. The collected data is processed and analyzed to generate knowledge. In the sense of Edge Computing, the Backend is represented as one level, but can be extended towards a plurality of levels or tiers, respectively, forming a complex hierarchy of the architecture. Processing and computation is moved further towards the devices level, wherein each device or edge is a vehicle. Accordingly, the latency, the computational power, and the storage of the Backend decreases. On the other hand, bandwidth, privacy, and responsiveness increases by pushing the intelligence and processing towards the vehicles instead of the Backend. Enabling computation, decision making, and intelligence at the vehicles provides the ability to perform machine learning in the vehicles close to the data sources collected by a plurality of well-known sensors, allowing to build low-latency and location-aware applications with keeping the privacy of the data collected and/or generated in each of the vehicles. Generally, the data collected and/or generated at the vehicles and the gained intelligence through machine learning can be used to support and improve the underlying infrastructure and management or to enable in-vehicle applications and services. Such services and applications supported by machine-learning techniques in the sense of Edge Computing can be found in the area of autonomous driving and/or autonomous driving use cases.

Federated Learning (FL) is a state of the art - approach for applying machine learning in edges, with reference to the above-mentioned system in the vehicles. Federated Learning has been introduced within the context of Edge Computing, aiming to solve the problem of machine-learning in edges under privacy sensitive data generated from massively distributed devices. According to the Federated Learning - Paradigm, multiple edges collaborate in solving a machine learning problem, under the coordination of the central Backend. Each vehicle's raw data is stored locally, in a storage device of one or more computational units of each respective vehicle and not exchanged or transferred to the Backend. Rather, focused updates intended for immediate aggregation are used to achieve the learning objective.

Each vehicle receives and deploys one global model, the generalized federated model $f_{FL}$, that is globally trained by the central Backend. To do so, the Backend transmits the generalized federated model $f_{FL}$ via a Network, e.g. the mobile network, to each of the vehicles. Each vehicle is storing and deploying the globally trained generalized federated model $f_{FL}$ received from the Backend locally, e.g. in the storage device of the computational unit. With the locally generated/accessed data, each vehicle is locally optimizing the locally stored model. Rather than transmitting locally accessed/generated data to the Backend, each vehicle is transmitting update parameters, e.g. from the computational unit to the Backend.

In an exemplary implementation, Federated Learning (FL) - as applied by the Backend is a distributed machine learning optimization problem in a network of vehicles. The aim is to locally optimize an objection function $J$ over distributed datasets. In the following, the vehicles will be also referred to as Edge Devices. In the following, the generation and updating of the generalized federated model $f_{FL}$ in the Backend and the Edge Devices is explained in more detail:

A network of $k \in \{1,...,k,...,K\}$ of Edge Devices is designed with each holding a local subset of data $D_k$ so that D = $\{D_1,...,D_k,...,D_K\}$.

This dataset $D_k$ is generated through Sensing and Actuating Nodes (SANs) sensing continuously contextual data in form of a d-dimensional vector $x_t$ with $\mathbf{x} \in \mathbb{R}^d$ and $t \in \mathbb{T} = \{1,\ldots,T\}$ with $T \in \mathbb{T}$.

Each time t a new contextual vector Xt is received at the Edge Device. In centralized learning this data is forwarded to the Backend that minimizes the objective function $\mathcal{J}$ over the entire dataset $D$. The optimization of the loss function $\mathcal{L}(x, y; w)$ can be approximated by exploring the Empirical Risk Minimization (ERM) instead of the expected risk.

Therefore, an approximation of $\hat{\mathcal{J}}$ over a training set D of size N using a set of models $f \in \mathcal{F}$ with represented parameters $\mathbf{w} \in \mathbb{R}^d$ the optimal solution for the ERM can be found. This is summarized in the following Equation:

$$\arg \min_{w \in \mathcal{F}} \mathcal{J}(w) \approx \hat{\mathcal{J}}_N(w) = \frac{1}{N} \sum_{i=1}^{N} \mathcal{L}(x_i, y_i; w)$$

(5.1)

In FL the optimization of the function $\mathcal{J}$ is performed by locally optimizing an objective function $\mathcal{J}_k$ in each Edge Device k over the local dataset $D_k$ with length $n_k$ so that

$$\sum_{k=1}^{K} n_K = N.$$

The Backend is aggregating the local generated objective functions $J_k$ so that:

$$\mathcal{J}(w) = \sum_{k=1}^{K} \frac{n_k}{N} \mathcal{J}_k(w) = \sum_{k=1}^{K} \frac{n_k}{N} \frac{1}{n_k} \sum_{i \in D_k} \mathcal{L}(x_i, y_i, w)$$

(5.2)

The loss function $\mathcal{L}(x_i, y_i, w)$ or local optimization function $\mathcal{J}_i(w)$ can be also noted as $j_i(w)$. One exemplary algorithm to solve the problem of Equation (5.2) is using the Stochastic Gradient Descent (SGD). Each iteration t the Edge Device (ED) $k$ aims to converge towards the minimum loss function $\mathcal{J}$, over its local data $D_k$ at time $t$ given a new datapoint $X_t$. This is by adapting the model parameters $\mathbf{w}_k^t$ with some factor $\eta$, called learning rate, and the gradient to the previous model parameters $\nabla j_k(w_k)$. Each Edge Device k is performing the following Equation at time t, as shown by Equation 5.3:

$$\mathbf{w}_k^{t+1} \leftarrow \mathbf{w}_k^t - \eta \nabla j_k(\mathbf{w}_k^t)$$

$$(5.3)$$

After multiple iterations, the updated model parameters of each Edge Device $k$ are sent to the Backend.

The Federated Learning algorithm within the Backend aggregates the received model parameters inside the central coordinator towards the new generalized model. This averaging is summarised in Equation 5.4.

$$\mathbf{w}^{t+1} = \sum_{k=1}^{K} \frac{n_k}{N} \mathbf{w}_k^{t+1}$$

$$(5.4)$$

After merging the local gradients of each Edge Device $k$ at the Backend, the final federated model is distributed to the Edge Devices and used locally for inference. Each ED $k$ is selected at a random time epochs with s = {1, ... , s, ... , S} to update the distributed generalized federated model $f_{FL}$ with its local data stored in a Sliding Window (SLW) $W_k^t$ and send the updated model parameters $w_k$ for the generalized federated model back to the Backend.

As outlined above, only implementing Federated Learning introduces multiple drawbacks within an application for an automotive environment. The first issue is the adaption of the generalized model - i.e. the final federated model distributed to the Edge Devices- to constantly changing environments in a vehicular context - e.g. highly dynamic environment, highly dynamic situation in the vehicle interior, etc. - in which the assumption of converging to a global minimization of the objective function $\mathcal{J}$ does not hold. The second problem arises as each Edge Device k always overwrites the locally adapted model $\hat{f}_{FL}$ with a newly received generalized federated model $f_{FL}$, such that locally learned context for each Edge Device is lost.

Moreover, with only applying Federated Learning, the global, final federated model is - at some point - considered to be optimized and is no longer updated by the Backend. However, when using machine learning in Edge Device environments and in particular in the automotive environment where each vehicle represents an Edge Device, the main challenge is the highly heterogeneous nature of the vehicles, resulting in non-i.i.d. data and evolving environment with possible concept drifts of the data collected by the vehicles.

In order to solve the above-mentioned problems, each vehicle further deploys a personalized model $f_k$ in a second computational unit locally in the respective vehicle.

In other words, each vehicle $k$ has deployed two models, the above-mentioned generalized federated model $f_{FL}$, received from the Backend, in a first computational unit and, in parallel, an evolving personalized model $f_k$ in a second computational unit.

For each prediction of a relevant automotive application - for example with reference to autonomous driving - a decision unit locally decides which of the personalized model $f_k$ or the generalized federated model $f_{FL}$ is the most accurate model to be used for the prediction $\hat{y}$:

$$\hat{y} \text{ with either } \hat{y} = f_{FL}(\mathbf{x}) \text{ or } \hat{y} = f_k(\mathbf{x})$$

Since each vehicle has limited resources, complex algorithms for the decision making cannot be used. Therefore, a lightweight method for balancing the personalized model $f_k$ and the generalized federated model $f_{FL}$ needs to be applied. In other words, since the vehicles resources are limited, a complex machine learning algorithm cannot be implemented for the decision making. Therefore, each vehicle of the system needs to apply continuous data prediction, forecasting and monitoring of the decision-making process.

Moreover, each vehicle needs to decide how and when to update both models, i.e. the generalized federated model $f_{FL}$ and the personalized model $f_k$. Each decision unit needs to decide which of the above-mentioned models to choose from for prediction $\hat{y}$. As outlined above, at epoch $s$, the vehicle $k$ of vehicles receives a globally trained model, i.e.

the generalized federated model $f_{FL}$ from the Backend.

According to the invention, the decision unit, when locally deciding how using the generalized federated model $f_{FL}$ and the personalized model $f_k$ for the prediction $\hat{y}$, and when performing the prediction $\hat{y}$, performs the following steps:

- calculating a prediction error $\varepsilon_k$ for the local, personalized model $f_k$ deployed in the second computational unit;
- calculating a prediction error $\varepsilon_{FL}$ for the generalized federated model $f_{FL}$ deployed in the first computational unit;
- calculating a reward value $\theta$ for the calculated prediction error $\varepsilon_k$ and $\varepsilon_{FL}$
- considering a historical performance of the local, personalized model $f_k$ and the generalized federated model $f_{FL}$; and

- calculating the prediction $\hat{y}$ by balancing the prediction of the local, personalized model $f_k$ and the generalized federated model $f_{FL}$.

As outlined above, each vehicle $k$ has deployed two models, the generalized federated model $f_{FL}$ in the first computational unit and, in parallel, the evolving personalised model $f_k$ in the second computational unit. For each prediction $\hat{y}$ of a relevant automotive application - for example with reference to autonomous driving - the decision unit could locally decide which of the personalized model $f_k$ or the generalized federated model $f_{FL}$ is the best model to be used for the prediction $\hat{y}$:

$$\hat{y} \text{ with either } \hat{y} = f_{FL}(\mathbf{x}) \text{ or } \hat{y} = f_k(\mathbf{x})$$

Since each vehicle has limited resources, complex algorithms for the decision making cannot be used. Therefore, a lightweight method for balancing the personalized model $f_k$ and the generalized federated model $f_{FL}$ are applied.

As outlined above, at epoch $s$, the vehicle $k$ of vehicles receives the globally trained model, i.e. the generalized federated model $f_{FL}$ from the Backend.

As also outlined above, in order to enable a global update for the generalized federated model $f_{FL}$, $k$ vehicles perform over its locally stored data in a **SLW** $Wk$ the update parameters using Equation (5.3). These updates are forwarded to the Backend and used into the new (a globally trained) model by combining all selected $k$ vehicles update parameters, as shown in Equation (5.4). In a next step, each vehicle receives the new globally trained model, i.e. the updated generalized federated model $f_{FL}$ which can be used for prediction $\hat{y}$ to perform the predictive analytics locally.

The personalized model $f_k$ is set to be at $t = 0$ the centrally received generalized federated model $f_{FL}$. The choice of using a pre-build model as starting point lies in the theories of transfer learning, which highlights that using a baseline model for retraining is generating an earlier convergence and higher accuracy than starting from scratch. SANs continuously measure the surrounding of each vehicle and generates respective measurement data. Each vehicle receives this measurement data from the SANs at each time $t$ with $t \in \mathbb{T} = \{1, \ldots, t, \ldots, T\}$ and $T \in \mathbb{T}$. Each time $t$ a d-dimensional data vector $x_t$ is collected and stored in the local window storage $W_k$ of size $M$. Only at the selected epoch s this data is used to update the newly received generalized federated model $f_{FL}$. If a vehicle needs to perform the prediction $\hat{y}$, it is using the previous cached generalized federated model $f_{FL}$.

In contrast, the personalized model $f_k$ is updated and retrained each time $t$ at the vehicle using a local SGD process.

One main technical advantage and keeping both models inside the vehicles is mainly to overcome the problem of losing generalization and the adaption to unseen data by only deploying a personal model. Moreover, the previously unknown relationship between the vehicles in evolving systems can be changing from an i.i.d. to a non-i.i.d. data relationship. This leads towards better accuracy to the generalized model or personalized model depending on the connection. Using a balancing mechanism of the generalized and personalized model inside each vehicle provides the benefits of both data relations towards qualitative prediction results.

The methodology presented in this application contributes towards the solution of the above-mentioned problems by using a reward system for choosing the right model for the prediction. In particular, the decision unit of vehicle k is operable to weigh the personalized model $f_k$ and generalized federated model $f_{FL}$ to generate a combined prediction $\hat{y}$. The final prediction $\hat{y}$ is calculated locally in each vehicle k of vehicles by using the local personalized model $f_k$ and the generalized federated model $f_{FL}$ with an adaptive balancing weight $\alpha$. The prediction $\hat{y}$ is performed/calculated locally in a decision unit of the respective vehicle.

The decision unit is operable to perform the steps of

- calculating a prediction error $\varepsilon_k$ for the local, personalized model $f_k$ deployed in the second computational unit; and
- calculating a prediction error $\varepsilon_{FL}$ for the generalized federated model $f_{FL}$ deployed in the first computational unit. To do so, the adaptive weight is calculated through multiple steps. First, whenever a vehicle receives from the SANs a new

contextual vector $x_t$ at time t, the prediction error $\varepsilon_k$ for the local, personalized model $f_k$ with respect to the actual prediction $y_t$ and the prediction error $\varepsilon_{FL}$ for the generalized federated model $f_{FL}$ is calculated as shown in Equation (5.5) and (5.6), respectively.

$$\epsilon_L = |y_t - f_k(\mathbf{x_t})| \tag{5.5}$$

$$\epsilon_{FL} = |y_t - f_{FL}(\mathbf{x_t})| \tag{5.6}$$

Given these two errors of Equation (5.5) and (5.6) inside each vehicle k of vehicles, it is possible to generate a reward value $\theta$ that is used as the source for balancing the personalized model $f_k$ and the generalized federated model $f_{FL}$. In each vehicle k of vehicles at each time $t$ based on the prediction error $\varepsilon_{FL}$ and the prediction error $\varepsilon_k$ a reward $\theta$ is set to 0 if the personalized model $f_k$ is performing better than the generalized federated model $f_{FL}$. The reward $\theta$ is set to 1 if the generalized federated model $f_{FL}$ performs better, as is shown in the following Equation:

$$\theta_t = \begin{cases} 0, & \epsilon_{FL} > \epsilon_L \\ 1, & \epsilon_{FL} \leq \epsilon_L \end{cases} \tag{5.7}$$

As shown in Equation (5.7), a positive reward is given to the generalized federated model $f_{FL}$ if the absolute error $\varepsilon_{FL}$ is smaller than the absolute error $\varepsilon_k$ of the personalized model $f_k$. As the reward system is deployed inside the respective vehicle 210 A ... 210 N should not only incorporate the current performance of the two models but also the historical performance, the reward-values $\theta$ at each time t are stored in a Sliding Window (SLW) $O_k$ with size $U$ for the last $t - U$ times. The SLW is defined in Equation (5.8) and contains just zeros and ones:

$$\mathcal{O}_k^t = \{\theta_{t-U}, \ldots, \theta_t\} \tag{5.8}$$

The SLW $O_k$ consists of the most recent $U$ rewards of $\theta \in \{0, 1\}$. At each time $t$, the SLW of rewards is used as a reference to generate a ratio that represents the performance of both models over the time horizon $t - U$. This ratio is defining the adaptive weighting value $\alpha$. An exemplary computation of a can be seen in Equation (5.9) and represents the historical performance of both models inside a respective vehicle.

$$\alpha = \frac{1}{U} \sum_{i=1}^{U} \theta_i \tag{5.9}$$

Each time $t$ vehicle $k$ is performing a prediction $\hat{y}$, the two model predictions of the personalized model $f_k$ and the generalized federated model $f_{FL}$ are weighted to the final prediction $\hat{y}$. The adaptive value $\alpha$ is used to combine the generalized federated model $f_{FL}$ and the local personalized model $f_k$ towards $\hat{y}$. The balancing of these two models is defined as shown in Equation (5.10):

$$f_{ASM} = \alpha f_{FL} + (1 - \alpha)f_k \tag{5.10}$$

An exemplary implementation algorithm for the above-mentioned steps is as follows: Backend 230:

```
1:  initialise w₀
2:  for each round s = 1, 2, ... do
3:      i = random subset of K
4:      for each ED i in parallel do
5:          wᵢˢ⁺¹ ← ED(i, wₛ)
6:          wᵢˢ⁺¹ ← ∑ᵢ₌₁ᴷ (nₖ/N) wᵢˢ⁺¹
7:      end for
8:  end for
```
                                                                *wherein ED is the respective vehicle 210 A ... 210N*

Respective vehicle 210 A ... 210 N (run at each vehicle $k$), wherein CL is the Backend 230:

```
 9:  f̄_FL ← (received from CL at t̄ = 0)
10:  for each round t = 1, 2, ... do
11:     contextual vector x_t is received
12:     f_k ← updated via Equation (5.3)
13:     ε_L ← |y_t − f_k^t(x_t)|
14:     ε_FL ← |y_t − f_FL^t(x_t)|
15:     θ ← calculated as in Equation (5.7)
16:     O_t ← θ
17:     α ← calculated as in Equation (5.9)
18:     if ŷ is needed then
19:        f_ASM ← calculated as in Equation (5.10)
20:     end if
21:     if s = t and ED i = k then
22:        f_FL ← updated as in Equation (5.3) or use ∇f_k
23:        return updated w to CL
24:     end if
25:  end for
```

The value range of $\alpha$ is between 1 and 0. A value of $\alpha \to 1$ means more influence towards the model predictions coming of the generalized federated model $f_{FL}$, whereas a value of $\alpha \to 0$ places more importance on the locally generated predictions of the personalized model $f_k$.

According to a further embodiment of the invention, the dynamic adaptation of the automotive application comprises one or more of the following:

- adapting any function of any driving assistance system application of the vehicle based on the calculated prediction value $\hat{y}$;
- adapting any function of any autonomous driving system application of the vehicle based on the calculated prediction value $\hat{y}$; and/or
- adapting any function of any infotainment system application of the vehicle based on the calculated prediction value $\hat{y}$; and/or
- adapting any appropriate function of any system application of the vehicle based on the calculated prediction value $\hat{y}$.

Considering as an example a function of a driving style of a user of the vehicle, a behavior or mood detection algorithm using audio, video and other sensor data inside the car can be used as input factors for generating the above-explained function. Based on the prediction value $\hat{y}$ for the driving style/mood/behavior of the user of the vehicle, one possibility for an above-mentioned driving assistance system application can be the adaptation of speed and distance control of the vehicle after the function/prediction identified a tired or distracted driver as user of the vehicle. This increases safety and security while the driving. Further it is possible to adapt the infotainment system towards stimulus music or individual interior light design given a driver's mood and behavior as user of the vehicle to either e.g. calm a stressed driver down or wakeup a tired driver with their favorite dance music. Moreover but not limited, can be the adaption towards autonomous driving applications by using a predefined selection of driving modes (e.g. eco, electric, ...), routes (coffee shop, restaurant, scenic drive, ...) or routines (call a certain person, reserve a treatment, ...) given the learning and prediction of the personal preferences towards a certain environment.

According to another aspect of the invention, a computer-implemented method for improving the efficiency and security in dynamic adaptation of an automotive application in a vehicle is provided.

According to the invention, the locally deciding, by the decision unit, how using the generalized federated model $f_{FL}$ and the personalized model $f_k$ for the prediction $\hat{y}$, and the performing of the prediction $\hat{y}$ comprises the steps of:

- calculating a prediction error $\varepsilon_k$ for the local, personalized model $f_k$ deployed in the second computational unit;
- calculating a prediction error $\varepsilon_{FL}$ for the generalized federated model $f_{FL}$ deployed in the first computational unit;
- calculating a reward value $\theta$ for the calculated prediction error $\varepsilon_k$ and $\varepsilon_{FL}$
- considering a historical performance of the local, personalized model $f_k$ and the generalized federated model $f_{FL}$; and
- calculating the prediction $\hat{y}$ by balancing the prediction of the local, personalized model $f_k$ and the generalized federated model $f_{FL}$.

According to yet a further embodiment of the invention, the dynamic adaptation of the automotive application comprises one or more of the following:

- adapting any function of any driving assistance system application of the vehicle based on the calculated prediction value $\hat{y}$;
- adapting any function of any autonomous driving system application of the vehicle based on the calculated prediction value $\hat{y}$; and/or
- adapting any function of any infotainment system application of the vehicle based on the calculated prediction value $\hat{y}$; and/or
- adapting any appropriate function of any system application of the vehicle based on the calculated prediction value $\hat{y}$

The aspects defined above and further aspects of the present invention are apparent from the examples of embodiment to be described hereinafter and are explained with reference to the examples of embodiment. The invention will be described in more detail hereinafter with reference to examples of embodiment. However, it is apparent to the person skilled in the art that the invention is not limited to the examples of embodiment.

**Figure 1** shows an exemplary Edge Computing System where Federated Learning is applied;

**Figure 2** shows an exemplary system for improving the efficiency and security in dynamic adaptation of an automotive application in a vehicle;

**Figure 3** shows an exemplary method for improving the efficiency and security in dynamic adaptation of an automotive application in a vehicle.

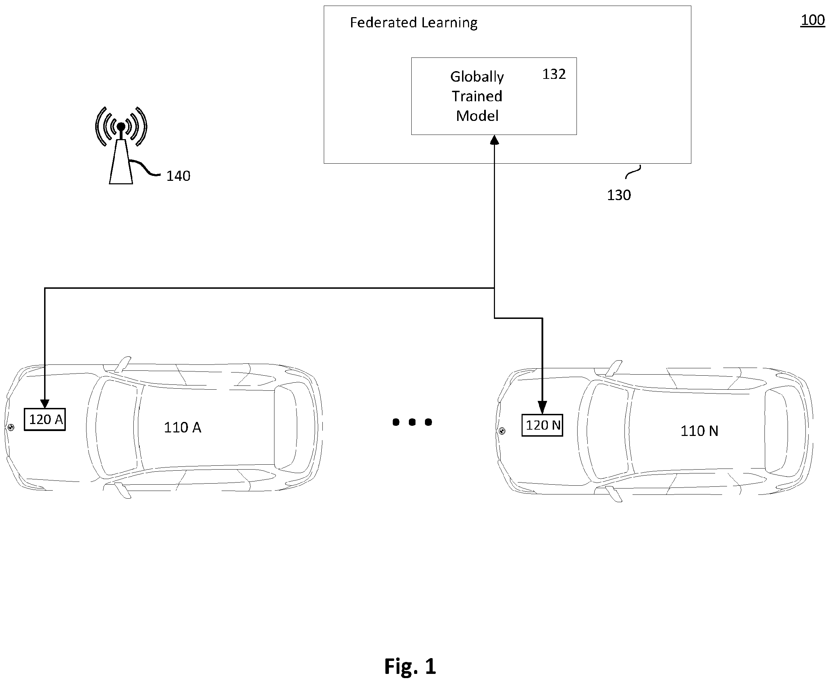

**Figure 1** shows an exemplary Edge Computing System 100 where Federated Learning is applied. Within this application, an Edge Computing System is a distributed system where different entities are connected to communicate with each other forming a network. Throughout this document, Edge Computing can be understood as processing the data at an Internet of Things (IoT)-device level. IoT is a ubiquitous computing paradigm in which everyday objects, e.g. vehicles 110 A ... 110 N, 210 A ... 210 N, are enriched with embedded computational power towards monitoring the environment by collecting data without any user interaction in real-time. The collected data is processed and analyzed to generate knowledge. In the sense of Edge Computing, Backend 130 is represented as one level, but can be extended towards a plurality of levels or tiers, respectively, forming a complex hierarchy of the architecture. Processing and computation is moved further towards the devices level, wherein each device or edge is a vehicle 110 A ... 110 N, 210 A ... 210 N. Accordingly, the latency, the computational power, and the storage of the Backend 130 decreases. On the other hand, bandwidth, privacy, and responsiveness increases by pushing the intelligence and processing towards the vehicles 110 A ... 110 N, 210 A ... 210 N instead of the Backend 130. Enabling computation, decision making, and intelligence at the edges 110 A ... 110 N, 210 A ... 210 N provides the ability to perform machine learning in the edge devices or vehicles 110 A ... 110 N, 210 A ... 210 N close to the data sources, allowing to build low-latency and location-aware applications with keeping the privacy of the data collected and/or generated in each of the vehicles. Generally, the data collected and/or generated at edge devices / vehicles 110 A ... 110 N, 210 A ... 210 N and the gained intelligence through machine learning can be used to support and improve the underlying infrastructure and management or to enable in-vehicle applications and services. Such services and applications supported by machine-learning techniques in the sense of Edge Computing can be found in the area of autonomous driving and/or autonomous driving use cases.

Federated Learning (FL) is a state of the art - approach for applying machine learning in edges 110 A ... 110 N, 210 A ... 210 N. Federated Learning has been introduced within the context of Edge Computing, aiming to solve the problem of machine-learning in edges 110 A ... 110 N, 210 A ... 210 N under privacy sensitive data generated from massively distributed devices. According to the Federated Learning - Paradigm, multiple edges 110 A ... 110 N, 210 A ... 210 N collaborate in solving a machine learning problem, under the coordination of a central Backend 130. Each edge's raw data is stored locally, e.g. in a storage device of a computational unit 110 A ... 110 N, 210 A ... 210 N and not exchanged or transferred to the Backend 130. Rather, focused updates intended for immediate aggregation are used to achieve the learning objective. Each edge 110 A ... 110 N, 210 A ... 210 N receives and deploys one global model 132 that is globally trained by the central Backend 130. The Backend 130, 230 transmits a globally trained model 132 via a Network, e.g. the mobile network 140, 240 to the edges 110 A ... 110 N, 210 A ... 210 N. Each edge 110 A ... 110 N, 210 A ... 210 N is storing and deploying the globally trained model 132 received from the Backend 130, 230 locally, e.g. in a storage device of the computational unit 120 A ... 120 N, 220 A ... 220 N. With the locally generated/accessed data, each edge 110 A ... 110 N, 210 A ... 210 N is locally optimizing the locally stored model. Rather than transmitting locally accessed/generated data to the Backend 130, 230, each edge 110 A ... 110 N, 210 A ... 210 N is only transmitting update parameters, e.g. from the computational unit 120 A ... 120 N, 220 A ... 220 N to the Backend 130, 230.

In an exemplary implementation, Federated Learning (FL) - as applied by the Backend 130, 230 is a distributed machine learning optimization problem in a network of Edge Devices 110 A ... 110 N, 210 A ... 210 N. The aim is to locally optimize an objection function J over distributed datasets.

A network of $k \in \{1,...,k,...,K\}$ of Edge Devices 110 A ... 110 N, 210 A ... 210 N is designed with each holding a local subset of data $D_k$, so that $D = \{D_1,...,D_k,...,D_K\}$.

This dataset $D_k$ is generated through Sensing and Actuating Nodes **(SANs)** sensing continuously contextual data in form of ad-dimensional vector $x_t$ with $\mathbf{x} \in \mathbb{R}^d$ and $t \in \mathbb{T} = \{1,\ldots,T\}$ with $T \in \mathbb{T}$.

Each time $t$ a new contextual vector Xt is received at the Edge Device 110 A ... 110 N, 210 A ... 210 N. In centralized learning this data is forwarded to the Backend 130 that minimizes the objective function $\mathcal{J}$ over the entire dataset $D$. The optimization of the loss function $\mathcal{L}(x, y; w)$ can be approximated by exploring the Empirical Risk Minimization (ERM) instead of the expected risk. Therefore, an approximation of $\hat{\mathcal{J}}$ over a training set $D$ of size $N$ using a set of models $f \in \mathcal{F}$ with represented parameters $\mathbf{w} \in \mathbb{R}^d$ the optimal solution for the ERM can be found. This is summarized in the following Equation:

$$\arg \min_{w \in \mathcal{F}} \mathcal{J}(w) \approx \hat{\mathcal{J}}_N(w) = \frac{1}{N} \sum_{i=1}^{N} \mathcal{L}(x_i, y_i; w)$$

$$(5.1)$$

In FL the optimisation of the function $\mathcal{J}$ is performed by locally optimizing an objective function $\mathcal{J}_k$ in each Edge Device k 110 A ... 110 N, 210 A ... 210 N over the local dataset $D_k$ with length $n_k$ so that $\sum_{k=1}^{K} n_K = N$.

The Backend 130, 230 is aggregating the local generated objective functions $J_k$ so that:

$$\mathcal{J}(w) = \sum_{k=1}^{K} \frac{n_k}{N} \mathcal{J}_k(w) = \sum_{k=1}^{K} \frac{n_k}{N} \frac{1}{n_k} \sum_{i \in D_k} \mathcal{L}(x_i, y_i, w)$$

$$(5.2)$$

The loss function $\mathcal{L}(x_i, yi, w)$ or local optimization function $\mathcal{J}_i(w)$ can be also noted as $j_i(w)$. One exemplary algorithm to solve the problem of Equation (5.2) is using the Stochastic Gradient Descent (SGD). Each iteration $t$ the Edge Device (ED) $k$ aims to converge towards the minimum loss function $\mathcal{J}$, over its local data $D_k$ at time $t$ given a new datapoint Xt. This is by adapting the model parameters $\mathbf{w}_k^t$ with some factor, called learning rate, and the gradient to the previous model parameters $\nabla j_k(w_k)$. Each Edge Device $k$ is performing the following Equation at time t, as shown by Equation 5.3:

$$\mathbf{w}_k^{t+1} \leftarrow \mathbf{w}_k^t - \eta \nabla j_k(\mathbf{w}_k^t)$$

$$(5.3)$$

After multiple iterations, the updated model parameters of each Edge Device k 110 A ... 110 N, 210 A ... 210 N are sent to the Backend 130, 230.

The Federated Learning algorithm within the Backend 130, 230 aggregates the received model parameters inside the central coordinator towards the new generalized model. This averaging is summarized in Equation 5.4.

$$\mathbf{w}^{t+1} = \sum_{k=1}^{K} \frac{n_k}{N} \mathbf{w}_k^{t+1}$$

$$(5.4)$$

After merging the local gradients of each Edge Device k 110 A ... 110 N, 210 A ... 210 N at the Backend 130, 230, the final federated model 132 is distributed to the Edge Devices 110 A ... 110 N, 210 A ... 210 N and used locally for inference. Each ED $k$ is selected at a random time epochs with s = {1, ... , s, ... , S} to update the distributed federated model $f_{FL}$ with its local data stored in a Sliding Window (SLW) $W_k^t$ and send the updated model parameters $w_k$ back to the Backend 130, 230.

As outlined above, an implementation of Federated Learning introduces multiple drawbacks within an application for an automotive environment. The first issue is the adaption of the generalized model - i.e. the final federated model 132 distributed to the Edge Devices $f_{FL}$-to constantly changing environments in a vehicular context - e.g. highly dynamic environment, highly dynamic situation in the vehicle interior, etc. - in which the assumption of converging to a global minimization of the objective function $\mathcal{J}$ does not hold. The second problem arises as each Edge Device 110 A ... 110 N always overwrites the locally adapted model $\hat{f}_{FL}$ with a newly received generalized model $f_{FL}$, such that locally learned context for each Edge Device 110 A ... 110 N is lost.

Moreover, with the application of Federated Learning, the global, final federated model 132 is - at some point - considered to be optimized and is no longer updated by the Backend 130. However, when using machine learning in edge device environments and in particular in the automotive environment where each vehicle 110 A ... 110 N represents an edge-device, the main challenge is the highly heterogeneous nature of the vehicles, resulting in non-i.i.d. data and continuous evolving of the data collected by the vehicles 110 A ... 110 N. This problem, however, cannot be addressed by only using the above-explained Federated Learning.

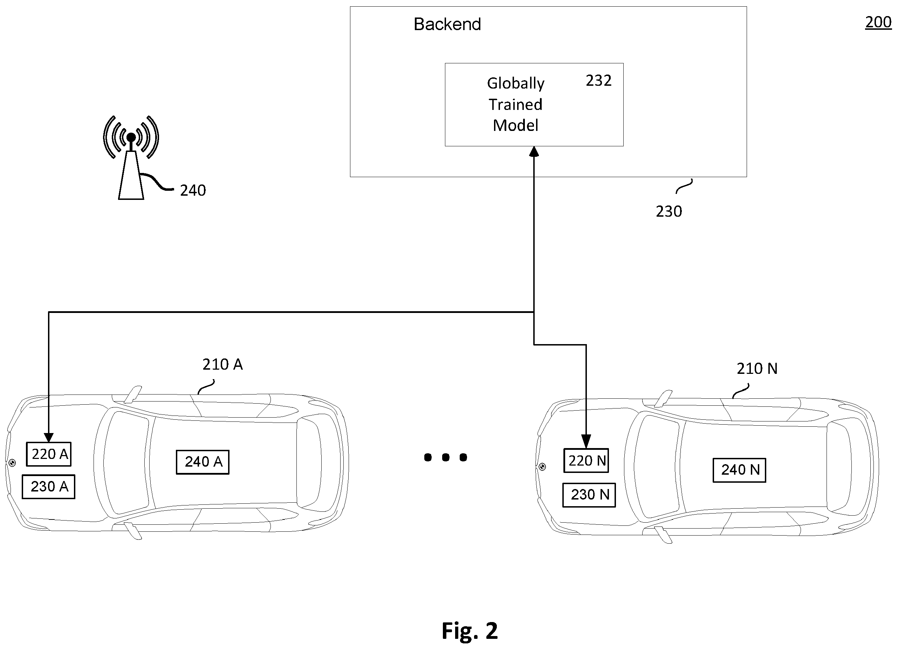

**Figure** 2 shows an exemplary system 200 improving the efficiency in security in dynamic adaption of automotive functions for a plurality of vehicles 210 A ... 210 N in a highly dynamic external and internal environment. The system 200 is in accordance with the system 100 as explained with reference to Figure 1 above for the generalized federated model $f_{FL}$, and comprises the following additional features.

Each vehicle $k$ 210 A ... 210 N has deployed two models, for example a generalized federated model $f_{FL}$ in a first computational unit 220 A ... 220 N and, in parallel, an evolving personalized model $f_k$ in a second computational unit 230 A ... 230 N. For each prediction of a relevant automotive application - for example with reference to autonomous driving - a decision unit 240 A ... 240 N, locally decides which of the personalized model $f_k$ or the generalized federated model $f_{FL}$ is the right model to be used for the prediction $\hat{y}$:

$\hat{y}$ with either $\hat{y} = f_{FL}(x)$ or $\hat{y} = f_k(x)$

Since each vehicle 210 A ... 210 N has limited resources, complex algorithms for the decision making cannot be used. Therefore, a lightweight method for balancing the personalized model $f_k$ and the generalized federated model $f_{FL}$ needs to be applied. In other words, in vehicles 210 A ... 210 N, a complex machine learning algorithm cannot be implemented for the decision making. Therefore, each vehicle of the system needs to apply continuous data prediction, forecasting and monitoring of the decision-making process.

Therefore, each vehicle 210 A ... 210 N needs to decide how and when to update both models, i.e. the generalized federated model $f_{FL}$ and the personalized model $f_k$. Moreover, each decision unit 240 A ... 240 N needs to decide which of the above-mentioned models to choose from for prediction $\hat{y}$. As outlined with reference to Figure 1 above, at epoch s, the vehicle $k$ of vehicles 210 A ... 210 N receives a globally trained model 232, i.e. the generalized federated model $f_{FL}$ from the Backend 230.

To do so, the vehicle $k$ of vehicles 210 A ... 210 N performs over its locally stored data in a **SLW** $Wk$ the update parameters using Equation (5.3). These updates are forwarded to the Backend 230 and used into the new a globally trained model 232 by combining all selected $k$ vehicles 210 A ... 210 N update parameters, as shown in Equation (5.4). In a next step, each vehicle 210 A ... 210 N receive the new globally trained model 232 which can be used for prediction $\hat{y}$ to perform the predictive analytics locally.

The personalized model $f_k$ is set to be at $t = 0$ the centrally received generalized federated model $f_{FL}$ The choice of using a pre-build model as starting point lies in the theories of transfer learning, which highlights that using a baseline model for retraining is generating an earlier convergence and higher accuracy than starting from scratch. SANs continuously measure the surrounding of each vehicle 210 A ... 210 N and generates respective measurement data. Each vehicle 210 A ... 210 N receives this measurement data from the SANs at each time $t$ with $t \in \mathbb{T} = \{1, \ldots, t, \ldots, T\}$ and $T \in \mathbb{T}$. Each time $t$ a d-dimensional data vector $x_t$ is collected and stored in the local window storage $W_k$ of size $M$. Only at the selected epoch s this data is used to update the newly received generalized federated model $f_{FL}$. If a vehicle 210 A ... 210 N needs to perform the prediction $\hat{y}$, it is using the previous cached model generalized federated model $f_{FL}$.

In contrast, the personalized model $f_k$ is updated and retrained each time t at the vehicle 210 A ... 210 N using a local SGD process.

One main technical advantage and keeping both models inside the vehicles 210 A ... 210 N is mainly to overcome the problem of losing generalization and the adaption to unseen data by only deploying a personal model. Moreover, the previously unknown relationship between the vehicles in evolving systems can be changing from an i.i.d. to a non-i.i.d. data relationship. This leads towards better accuracy to the generalized model or personalized model depending on the connection. Using a balancing mechanism of the generalized and personalized model inside each vehicle provides the benefits of both data relations towards qualitative prediction results.

The methodology presented in this application contributes towards the solution of the above-mentioned problem by using a reward system to weigh the personalized model $f_k$ and generalized federated model $f_{FL}$ combined prediction $\hat{y}$. The final prediction $\hat{y}$ is calculated locally in each vehicle $k$ of vehicles 210 A ... 210 N by using the local personalized model $f_k$ and the generalized federated model $f_{FL}$ with a adaptive balancing weight $\alpha$. The prediction $\hat{y}$ is performed/calculated locally in a decision unit 240 A ... 240 N of the respective vehicle 210 A ... 210 N.

The adaptive weight is calculated through multiple steps. First, whenever a vehicle 210 A ... 210 N receives from the SANs a new contextual vector $x_t$ at time $t$, the prediction error $\varepsilon_k$ for the local, personalized model $f_k$ with respect to the actual prediction $\hat{y}_t$ and the prediction error $\varepsilon_{FL}$ for the generalized federated model $f_{FL}$ is calculated as shown in Equation (5.5) and (5.6), respectively.

$$\epsilon_L = |y_t - f_k(\mathbf{x_t})| \qquad (5.5)$$

$$\epsilon_{FL} = |y_t - f_{FL}(\mathbf{x_t})| \qquad (5.6)$$

Given these two errors of Equation (5.5) and (5.6) inside each vehicle $k$ of vehicles 210 A ... 210 N, it is possible to generate a reward value $\theta$ that is used as the source for balancing the personalized model $f_k$ and the generalized federated model $f_{FL}$. In each vehicle $k$ of vehicles 210 A ... 210 N at each time $t$ based on the prediction error $\varepsilon_{FL}$ and the prediction error $\varepsilon_k$ a reward $\theta$ is set to 0 if the personalized model $f_k$ is performing better than the generalized federated model $f_{FL}$. The reward $\theta$ is set to 1 if the generalized federated model $f_{FL}$ performs better, as is shown in the following Equation:

$$\theta_t = \begin{cases} 0, & \epsilon_{FL} > \epsilon_L \\ 1, & \epsilon_{FL} \leq \epsilon_L \end{cases} \qquad (5.7)$$

As shown in Equation (5.7), a positive reward is given to the generalized federated model $f_{FL}$ if the absolute error $\varepsilon_{FL}$ is smaller than the absolute error $\varepsilon_k$ of the personalized model $f_k$. As the reward system is deployed inside the respective vehicle 210 A ... 210 N should not only incorporate the current performance of the two models but also the historical performance, the reward-values $\theta$ at each time t are stored in a Sliding Window (SLW) $O_k$ with size $U$ for the last $t - U$ times. The SLW is defined in Equation (5.8) and contains just zeros and ones:

$$\mathcal{O}_k^t = \{\theta_{t-U}, \ldots, \theta_t\} \qquad (5.8)$$

The SLW $O_k$ consists of the most recent $U$ rewards of $\theta \in \{0, 1\}$. At each time $t$, the SLW of rewards is used as a reference to generate a ratio that represents the performance of both models over the time horizon $t - U$. This ratio is defining the adaptive weighting value $\alpha$. An exemplary computation of a can be seen in Equation (5.9) and represents the historical performance of both models inside a respective vehicle 210 A ... 210 N.

$$\alpha = \frac{1}{U} \sum_{i=1}^{U} \theta_i \qquad (5.9)$$

Each time the respective vehicle 210 A ... 210 N is performing a prediction $\hat{y}$, the two model predictions of the personalized model $f_k$ and the generalized federated model $f_{FL}$ are weighted to the final prediction $\hat{y}$. The adaptive value $\alpha$ is used to combine the generalized federated model $f_{FL}$ and the local personalized model $f_k$ towards $\hat{y}$. The balancing of these two models is defined as shown in Equation (5.10):

$$f_{ASM} = \alpha f_{FL} + (1 - \alpha) f_k \qquad (5.10)$$

An exemplary implementation algorithm for the above-mentioned steps is as follows: Backend 230:

```
1: initialise w_0
2: for each round s = 1, 2, ... do
3:    i = random subset of K
4:    for each ED i in parallel do
5:        w_i^{s+1} ← ED(i, w_s)
6:        w_i^{s+1} ← Σ_{i=1}^{K} (n_k/N) w_i^{s+1}
7:    end for
8: end for
```

*wherein ED is the respective vehicle 210 A ... 210N-*

Respective vehicle 210 A ... 210 N (run at each vehicle k, wherein CL is the Backend 230):

```
9:  f_{FL} ← (received from CL at t = 0)
10: for each round t = 1, 2, ... do
11:     contextual vector x_t is received
12:     f_k ← updated via Equation (5.3)
13:     ε_L ← |y_t − f_k^t(x_t)|
14:     ε_{FL} ← |y_t − f_{FL}^t(x_t)|
15:     θ ← calculated as in Equation (5.7)
16:     O_t ← θ
17:     α ← calculated as in Equation (5.9)
18:     if ŷ is needed then
19:         f_{ASM} ← calculated as in Equation (5.10)
20:     end if
21:     if s = t and ED i = k then
22:         f_{FL} ← updated as in Equation (5.3) or use ∇f_k
23:         return updated w to CL
24:     end if
25: end for
```

The value range of $\alpha$ is between 1 and 0. A value of $\alpha \to 1$ means more influence towards the model predictions coming of the generalized federated model $f_{FL}$, whereas a value of $\alpha \to 0$ places more importance on the locally generated predictions of the personalized model $f_k$.

The dynamic adaptation of the automotive application may comprise one or more of the following:

- adapting any function of any driving assistance system application of the vehicle k of vehicles 210 A ... 210 based on the calculated prediction value $\hat{y}$;
- adapting any function of any autonomous driving system application of the vehicle k of vehicles 210 A ... 210 based on the calculated prediction value $\hat{y}$; and/or
- adapting any function of any infotainment system application of the vehicle k of vehicles 210 A ... 210 based on the calculated prediction value $\hat{y}$; and/or
- adapting any appropriate function of any system application of the vehicle $k$ of vehicles 210 A ... 210 based on the calculated prediction value $\hat{y}$.

Considering as an example a function of driving style, behavior or mood detection algorithm of a user of vehicle $k$ of vehicles 210 A ... 210, audio, video and other sensor data inside vehicle $k$ of vehicles 210 A ... 210 can be taken as input factors for generating the above-explained function. Based on the prediction value $\hat{y}$ for the driving style/mood/behavior of a user of vehicle $k$ of vehicles 210 A ... 210, one possibility for a driving assistance system application can be the adaption of speed and distance control of vehicle $k$ of vehicles 210 A ... 210 after the function/prediction identified a tired or distracted driver as user of vehicle $k$ of vehicles 210 A ... 210. This increases safety and security while the driving. Further it is possible to adapt the infotainment system of vehicle $k$ of vehicles 210 A ... 210 towards stimulus music or individual interior light design given a mood and behavior of a user of vehicle $k$ of vehicles 210 A ... 210 to either e.g. calm the stressed driver/user down or wakeup the tired driver/user with their favorite dance music, respectively. Moreover but not limited, can be the adaption towards autonomous driving applications by using a predefined selection of driving modes (e.g. eco, electric,...), routes (coffee shop, restaurant, scenic drive,...) or routines (call a certain person, reserve a treatment,...) of vehicle $k$ of vehicles 210 A ... 210 given the learning and prediction of personal preferences of a user of vehicle $k$ of vehicles 210 A ... 210 towards a certain environment.

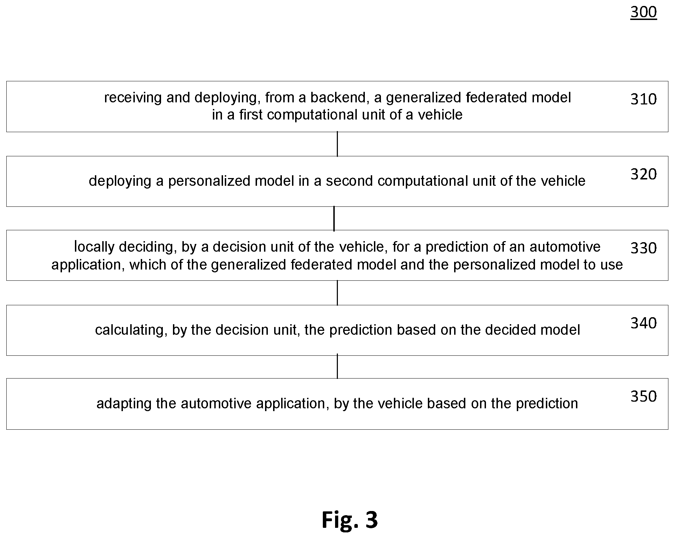

**Figure 3** shows an exemplary computer-implemented Method 300 for improving the efficiency and security in dynamic adaptation of an automotive application in a vehicle 210 A ... 210 N. The method 300 can be performed and/or executed by the System 200 as outlined with reference to Figure 1 and Figure 2 above.

The locally deciding 330, by the decision unit 240 A ... 240 N, how using the generalized federated model $f_{FL}$ and the personalized model $f_k$ for the prediction $\hat{y}$, and the performing 340 of the prediction $\hat{y}$ may comprise the steps of:

- calculating a prediction error $\varepsilon_k$ for the local, personalized model $f_k$ deployed in the second computational unit 230 A ... 230 N;
- calculating a prediction error $\varepsilon_{FL}$ for the generalized federated model $f_{FL}$ deployed in the first computational unit 220 A ... 220 N;
- calculating a reward value $\theta$ for the calculated prediction error $\varepsilon_k$ and $\varepsilon_{FL}$
- considering a historical performance of the local, personalized model $f_k$ and the generalized federated model $f_{FL}$; and
- calculating the prediction $\hat{y}$ by balancing the prediction of the local, personalized model $f_k$ and the generalized federated model $f_{FL}$.

The dynamic adaptation of the automotive application 350 may comprise one or more of the following:

- adapting any function of any driving assistance system application of the vehicle 210 A ... 210 N based on the calculated prediction value $\hat{y}$;
- adapting any function of any autonomous driving system application of the vehicle 210 A ... 210 N based on the calculated prediction value $\hat{y}$; and/or
- adapting any function of any infotainment system application of the vehicle 210 A ... 210 N based on the calculated prediction value $\hat{y}$; and/or
- adapting any appropriate function of any system application of the vehicle based 210 A ... 210 N based on the calculated prediction value $\hat{y}$.

## Claims

1. Vehicle system (200) for improving the efficiency and security in dynamic adaptation of an automotive application in a vehicle (210 A ... 210 N), the system (200) comprising:

    a Backend (230) comprising a generalized federated model $f_{FL}$ deployed thereon,
    wherein the vehicle (210 A ... 210 N) is operable to receive and deploy the generalized federated model $f_{FL}$ in a first computational unit (220 A ... 220 N);
    wherein the vehicle (210 A ... 210 N) is operable to deploy a personalized model $f_k$ in a second computational unit (230 A ... 230 N); and
    wherein the vehicle (210 A ... 210 N) comprises a decision unit (240 A ... 240 N) that is operable to locally decide, for a prediction $\hat{y}$ of the automotive application, how using the generalized federated model $f_{FL}$ and the personalized model $f_k$;
    calculating, by the decision unit (240 A ... 240 N), the prediction $\hat{y}$ using the decided model; and
    adapting the function of the automotive application based on the prediction $\hat{y}$,

    wherein the decision unit (240 A ... 240 N), when locally deciding how using the generalized federated model $f_{FL}$ and the personalized model $f_k$ for the prediction $\hat{y}$, and when performing the prediction $\hat{y}$ performs the following steps:

    - calculating a prediction error $\varepsilon_k$ for the local, personalized model $f_k$ deployed in the second computational unit (230 A ... 230 N);
    - calculating a prediction error $\varepsilon_{FL}$ for the generalized federated model $f_{FL}$ deployed in the first computational unit (220 A ... 220 N);
    - calculating a reward value $\theta$ for the calculated prediction error $\varepsilon_k$ and $\varepsilon_{FL}$
    - considering a historical performance of the local, personalized model $f_k$ and the generalized federated model $f_{FL}$; and
    - calculating the prediction $\hat{y}$ by balancing the prediction of the local, personalized model $f_k$ and the generalized federated model $f_{FL}$, wherein the two model predictions of the personalized model and the generalized federated model are weighted to the final prediction $\hat{y}$, wherein historical performance is incorporated by storing the reward-

values $\theta$ at each time t in a sliding window $O_k$ with size $U$ for the last $t$ - $U$ times, where the sliding window $O_k$ consists of the most recent $U$ rewards of $\theta$, and wherein at each time $t$, the sliding window $O_k$ of rewards is used as a reference to generate a ratio that represents the performance of both models over the time horizon $t$ - $U$, this ratio then defining an adaptive weighting value $\alpha$ representing the historical performance of both models inside a respective vehicle and using the adaptive value $\alpha$ to combine the generalized federated model and the local personalized model towards the prediction $\hat{y}$.

2. Vehicle system (200) according to the preceding claim and comprising a driving assistance system and/or an autonomous driving system and/or an infotainment system, wherein a dynamic adaptation of the function of the automotive application comprises one or more of the following:

- adapting any function of the driving assistance system application of the vehicle (210 A ... 210 N) based on the calculated prediction value $\hat{y}$;
- adapting any function of the autonomous driving system application of the vehicle (210 A ... 210 N) based on the calculated prediction value $\hat{y}$; and/or
- adapting any function of the infotainment system application of the vehicle (210 A ... 210 N) based on the calculated prediction value $\hat{y}$; and/or
- adapting any appropriate function of any system application of the vehicle based (210 A ... 210 N) based on the calculated prediction value $\hat{y}$.

3. Computer-implemented Method (300) for improving the efficiency and security in dynamic adaptation of an automotive application in a vehicle (210 A ... 210 N), the Method (300) comprising the following steps:

- receiving and deploying (310), from a Backend (230), a generalized federated model $f_{FL}$ in a first computational unit (220 A ... 220 N) of the vehicle (210 A ... 210 N);
- deploying (320) a personalized model $f_k$ in a second computational unit (230 A ... 230 N) of the vehicle (210 A ... 210 N);
- locally deciding (330), by a decision unit (240 A ... 240 N) of the vehicle (210 A ... 210 N), for a prediction $\hat{y}$ of the automotive application, how using the generalized federated model $f_{FL}$ and the personalized model $f_k$;
- calculating (340), by the decision unit (240 A ... 240 N) the prediction $\hat{y}$ based on the decided model; and
- adapting (350) a function of the automotive application, by the vehicle (210 A ... 210 N) based on the prediction $\hat{y}$,

wherein the locally deciding (330), by the decision unit (240 A ... 240 N) how using the generalized federated model $f_{FL}$ and the personalized model $f_k$ for the prediction $\hat{y}$, and the performing (340) of the prediction $\hat{y}$ comprises the steps of:

- calculating a prediction error $\varepsilon_k$ for the local, personalized model $f_k$ deployed in the second computational unit (230 A ... 230 N);
- calculating a prediction error $\varepsilon_{FL}$ for the generalized federated model $f_{FL}$ deployed in the first computational unit (220 A ... 220 N);
- calculating a reward value $\theta$ for the calculated prediction error $\varepsilon_k$ and $\varepsilon_{FL}$
- considering a historical performance of the local, personalized model $f_k$ and the generalized federated model $f_{FL}$; and
- calculating the prediction $\hat{y}$ by balancing the prediction of the local, personalized model $f_k$ and the generalized federated model $f_{FL}$, wherein the two model predictions of the personalized model and the generalized federated model are weighted to the final prediction $\hat{y}$, wherein historical performance is incorporated by storing the reward-values $\theta$ at each time t in a sliding window $O_k$ with size $U$ for the last $t$ - $U$ times, where the sliding window $O_k$ consists of the most recent $U$ rewards of $\theta$, and wherein at each time $t$, the sliding window $O_k$ of rewards is used as a reference to generate a ratio that represents the performance of both models over the time horizon $t$ - $U$, this ratio then defining an adaptive weighting value $\alpha$ representing the historical performance of both models inside a respective vehicle and using the adaptive value $\alpha$ to combine the generalized federated model and the local personalized model towards the prediction $\hat{y}$.

4. Method (300) according to claim 3, wherein the vehicle comprises a driving assistance system and/or an autonomous driving system and/or an infotainment system and wherein a dynamic adaptation of the function of the automotive application (350) comprises one or more of the following:

- adapting any function of any driving assistance system application of the vehicle (210 A ... 210 N) based on the calculated prediction value $\hat{y}$;

- adapting any function of any autonomous driving system application of the vehicle (210 A ... 210 N) based on the calculated prediction value ŷ; and/or
- adapting any function of any infotainment system application of the vehicle (210 A ... 210 N) based on the calculated prediction value ŷ; and/or
- adapting any appropriate function of any system application of the vehicle based (210 A ... 210 N) based on the calculated prediction value ŷ.

**Patentansprüche**

1. Fahrzeugsystem (200) zur Verbesserung der Effizienz und Sicherheit bei der dynamischen Anpassung einer Fahrzeuganwendung in einem Fahrzeug (210 A ... 210 N), wobei das System (200) umfasst:

   ein Backend (230), das ein verallgemeinertes föderiertes Modell $f_{FL}$ umfasst, das darauf eingesetzt ist,
   wobei das Fahrzeug (210 A ... 210 N) betreibbar ist, um das verallgemeinerte föderierte Modell $f_{FL}$ in einer ersten Recheneinheit (220 A ... 220 N) zu empfangen und einzusetzen;
   wobei das Fahrzeug (210 A ... 210 N) betreibbar ist, um ein personalisiertes Modell $f_k$ in einer zweiten Recheneinheit (230 A ... 230 N) einzusetzen; und
   wobei das Fahrzeug (210 A ... 210 N) eine Entscheidungseinheit (240 A ... 240 N) umfasst, die betreibbar ist, um lokal zu entscheiden, für eine Vorhersage ŷ der Fahrzeuganwendung, wie das verallgemeinerte föderierte Modell $f_{FL}$ und das personalisierte Modell $f_k$ zu verwenden sind;
   Berechnen, durch die Entscheidungseinheit (240 A ... 240 N), der Vorhersage ŷ unter Verwendung des entschiedenen Modells; und
   Anpassen der Funktion der Fahrzeuganwendung basierend auf der Vorhersage ŷ, wobei die Entscheidungseinheit (240 A ... 240 N), wenn sie lokal entscheidet, wie das verallgemeinerte föderierte Modell $f_{FL}$ und das personalisierte Modell $f_k$ für die Vorhersage ŷ zu verwenden sind, und wenn sie die Vorhersage ŷ durchführt, die folgenden Schritte durchführt:

   • Berechnen eines Vorhersagefehlers $\varepsilon_k$ für das lokale, personalisierte Modell $f_k$ , das in der zweiten Recheneinheit (230 A ... 230 N) eingesetzt ist;
   • Berechnen eines Vorhersagefehlers $\varepsilon_{FL}$ für das verallgemeinerte föderierte Modell $f_{FL}$, das in der ersten Recheneinheit (220 A ... 220 N) eingesetzt ist;
   • Berechnen eines Belohnungswerts $\theta$ für den berechneten Vorhersagefehler $\varepsilon_k$ und $\varepsilon_{FL}$;
   • Berücksichtigen einer historischen Leistung des lokalen, personalisierten Modells $f_k$ und des verallgemeinerten föderierten Modells $f_{FL}$; und
   • Berechnen der Vorhersage ŷ durch Ausbalancieren der Vorhersage des lokalen, personalisierten Modells $f_k$ und des verallgemeinerten föderierten Modells $f_{FL}$, wobei die zwei Modellvorhersagen des personalisierten Modells und des verallgemeinerten föderierten Modells zu der endgültigen Vorhersage ŷ gewichtet werden, wobei historische Leistung einbezogen wird durch Speichern der Belohnungswerte $\theta$ zu jedem Zeitpunkt t in einem gleitenden Fenster $O_k$ mit Größe $U$ für die letzten $t - U$ Zeitpunkte, wobei das gleitende Fenster $O_k$ aus den jüngsten U Belohnungen von $\theta$ besteht, und wobei zu jedem Zeitpunkt $t$ das gleitende Fenster $O_k$ von Belohnungen als Referenz verwendet wird, um ein Verhältnis zu erzeugen, das die Leistung beider Modelle über den Zeithorizont $t - U$ darstellt, wobei dieses Verhältnis dann einen adaptiven Gewichtungswert $\alpha$ definiert, der die historische Leistung beider Modelle innerhalb eines jeweiligen Fahrzeugs darstellt, und unter Verwendung des adaptiven Werts $\alpha$, um das verallgemeinerte föderierte Modell und das lokale personalisierte Modell zu der Vorhersage ŷ zu kombinieren.

2. Fahrzeugsystem (200) nach dem vorhergehenden Anspruch und umfassend ein Fahrerassistenzsystem und/oder ein autonomes Fahrsystem und/oder ein Infotainmentsystem, wobei eine dynamische Anpassung der Funktion der Fahrzeuganwendung eines oder mehrere der folgenden umfasst:

   • Anpassen jeglicher Funktion der Fahrerassistenzsystemanwendung des Fahrzeugs (210 A ... 210 N) basierend auf dem berechneten Vorhersagewert ŷ;
   • Anpassen jeglicher Funktion der autonomen Fahrsystemanwendung des Fahrzeugs (210 A ... 210 N) basierend auf dem berechneten Vorhersagewert v; und/oder
   • Anpassen jeglicher Funktion der Infotainmentsystemanwendung des Fahrzeugs (210 A ... 210 N) basierend auf dem berechneten Vorhersagewert ŷ; und/oder
   • Anpassen jeglicher geeigneten Funktion jeglicher Systemanwendung des Fahrzeugs (210 A ... 210 N) basierend auf dem berechneten Vorhersagewert $\hat{y}$.

3. Computerimplementiertes Verfahren (300) zur Verbesserung der Effizienz und Sicherheit bei der dynamischen Anpassung einer Fahrzeuganwendung in einem Fahrzeug (210 A ... 210 N), wobei das Verfahren (300) die folgenden Schritte umfasst:

  • Empfangen und Einsetzen (310), von einem Backend (230), eines verallgemeinerten föderierten Modells $f_{FL}$ in einer ersten Recheneinheit (220 A ... 220 N) des Fahrzeugs (210 A ... 210 N);
  • Einsetzen (320) eines personalisierten Modells $f_k$ in einer zweiten Recheneinheit (230 A ... 230 N) des Fahrzeugs (210 A ... 210 N);
  • lokales Entscheiden (330), durch eine Entscheidungseinheit (240 A ... 240 N) des Fahrzeugs (210 A ... 210 N), für eine Vorhersage $\hat{y}$ der Fahrzeuganwendung, wie das verallgemeinerte föderierte Modell $f_{FL}$ und das personalisierte Modell $f_k$ zu verwenden sind;
  • Berechnen (340), durch die Entscheidungseinheit (240 A ... 240 N), der Vorhersage $\hat{y}$ basierend auf dem entschiedenen Modell; und
  • Anpassen (350) einer Funktion der Fahrzeuganwendung, durch das Fahrzeug (210 A ... 210 N), basierend auf der Vorhersage $\hat{y}$,

wobei das lokale Entscheiden (330), durch die Entscheidungseinheit (240 A ... 240 N), wie das verallgemeinerte föderierte Modell $f_{FL}$ und das personalisierte Modell $f_k$ für die Vorhersage $\hat{y}$ zu verwenden sind, und das Durchführen (340) der Vorhersage $\hat{y}$ die Schritte umfasst:

  • Berechnen eines Vorhersagefehlers $\varepsilon_k$ für das lokale, personalisierte Modell $f_k$, das in der zweiten Recheneinheit (230 A ... 230 N) eingesetzt ist;
  • Berechnen eines Vorhersagefehlers $\varepsilon_{FL}$ für das verallgemeinerte föderierte Modell $f_{FL}$, das in der ersten Recheneinheit (220 A ... 220 N) eingesetzt ist;
  • Berechnen eines Belohnungswerts $\theta$ für den berechneten Vorhersagefehler $\varepsilon_k$ und $\varepsilon_{FL}$;
  • Berücksichtigen einer historischen Leistung des lokalen, personalisierten Modells $f_k$ und des verallgemeinerten föderierten Modells $f_{FL}$; und
  • Berechnen der Vorhersage $\hat{y}$ durch Ausbalancieren der Vorhersage des lokalen, personalisierten Modells $f_k$ und des verallgemeinerten föderierten Modells $f_{FL}$, wobei die zwei Modellvorhersagen des personalisierten Modells und des verallgemeinerten föderierten Modells zu der endgültigen Vorhersage $\hat{y}$ gewichtet werden, wobei historische Leistung einbezogen wird durch Speichern der Belohnungswerte $\theta$ zu jedem Zeitpunkt t in einem gleitenden Fenster $O_k$ mit Größe U für die letzten $t - U$ Zeitpunkte, wobei das gleitende Fenster $O_k$ aus den jüngsten U Belohnungen von $\theta$ besteht, und wobei zu jedem Zeitpunkt $t$ das gleitende Fenster $O_k$ von Belohnungen als Referenz verwendet wird, um ein Verhältnis zu erzeugen, das die Leistung beider Modelle über den Zeithorizont $t - U$ darstellt, wobei dieses Verhältnis dann einen adaptiven Gewichtungswert $\alpha$ definiert, der die historische Leistung beider Modelle innerhalb eines jeweiligen Fahrzeugs darstellt, und unter Verwendung des adaptiven Werts $\alpha$, um das verallgemeinerte föderierte Modell und das lokale personalisierte Modell zu der Vorhersage $\hat{y}$ zu kombinieren.

4. Verfahren (300) nach Anspruch 3, wobei das Fahrzeug ein Fahrerassistenzsystem und/oder ein autonomes Fahrsystem und/oder ein Infotainmentsystem umfasst und wobei eine dynamische Anpassung der Funktion der Fahrzeuganwendung (350) eines oder mehrere der folgenden umfasst:

  • Anpassen jeglicher Funktion jeglicher Fahrerassistenzsystemanwendung des Fahrzeugs (210 A ... 210 N) basierend auf dem berechneten Vorhersagewert $\hat{y}$;
  • Anpassen jeglicher Funktion jeglicher autonomen Fahrsystemanwendung des Fahrzeugs (210 A ... 210 N) basierend auf dem berechneten Vorhersagewert $\hat{y}$; und/oder
  • Anpassen jeglicher Funktion jeglicher Infotainmentsystemanwendung des Fahrzeugs (210 A ... 210 N) basierend auf dem berechneten Vorhersagewert $\hat{y}$; und/oder
  • Anpassen jeglicher geeigneten Funktion jeglicher Systemanwendung des Fahrzeugs (210 A ... 210 N) basierend auf dem berechneten Vorhersagewert $\hat{y}$.

**Revendications**

1. Système de véhicule (200) pour améliorer l'efficacité et la sécurité dans l'adaptation dynamique d'une application automobile dans un véhicule (210 A ... 210 N), le système (200) comprenant :

un serveur dorsal (230) comprenant un modèle fédéré généralisé $f_{FL}$ déployé sur celui-ci,

dans lequel le véhicule (210 A ... 210 N) est apte à recevoir et déployer le modèle fédéré généralisé $f_{FL}$ dans une première unité de calcul (220 A ... 220 N) ;

dans lequel le véhicule (210 A ... 210 N) est apte à déployer un modèle personnalisé $f_k$ dans une seconde unité de calcul (230 A ... 230 N) ; et

dans lequel le véhicule (210 A ... 210 N) comprend une unité de décision (240 A ... 240 N) qui est apte à décider localement, pour une prédiction $\hat{y}$ de l'application automobile, comment utiliser le modèle fédéré généralisé $f_{FL}$ et le modèle personnalisé $f_k$ ;

calculer, par l'unité de décision (240 A ... 240 N), la prédiction $\hat{y}$ en utilisant le modèle décidé ; et

adapter la fonction de l'application automobile sur la base de la prédiction $\hat{y}$,

dans lequel l'unité de décision (240 A ... 240 N), lorsqu'elle décide localement comment utiliser le modèle fédéré généralisé $f_{FL}$ et le modèle personnalisé $f_k$ pour la prédiction $\hat{y}$, et lorsqu'elle effectue la prédiction $\hat{y}$, effectue les étapes suivantes :

• calculer une erreur de prédiction $\varepsilon_k$ pour le modèle local personnalisé $f_k$ déployé dans la seconde unité de calcul (230 A ... 230 N) ;

• calculer une erreur de prédiction $\varepsilon_{FL}$ pour le modèle fédéré généralisé $f_{FL}$ déployé dans la première unité de calcul (220 A ... 220 N) ;

• calculer une valeur de récompense $\theta$ pour l'erreur de prédiction calculée $\varepsilon_k$ et $\varepsilon_{FL}$ ;

• prendre en compte une performance historique du modèle local personnalisé $f_k$ et du modèle fédéré généralisé $f_{FL}$ ; et

• calculer la prédiction $\hat{y}$ en équilibrant la prédiction du modèle local personnalisé $f_k$ et du modèle fédéré généralisé $f_{FL}$, dans lequel les deux prédictions de modèle du modèle personnalisé et du modèle fédéré généralisé sont pondérées vers la prédiction finale $\hat{y}$, dans lequel la performance historique est incorporée en stockant les valeurs de récompense $\theta$ à chaque instant t dans une fenêtre glissante $O_k$ de taille $U$ pour les derniers $t - U$ instants, où la fenêtre glissante $O_k$ consiste en les $U$ récompenses les plus récentes de $\theta$, et dans lequel à chaque instant $t$, la fenêtre glissante $O_k$ de récompenses est utilisée comme référence pour générer un rapport qui représente la performance des deux modèles sur l'horizon temporel $t - U$, ce rapport définissant ensuite une valeur de pondération adaptative $\alpha$ représentant la performance historique des deux modèles à l'intérieur d'un véhicule respectif et en utilisant la valeur adaptative $\alpha$ pour combiner le modèle fédéré généralisé et le modèle personnalisé local vers la prédiction $\hat{y}$.

2. Système de véhicule (200) selon la revendication précédente et comprenant un système d'assistance à la conduite et/ou un système de conduite autonome et/ou un système d'infodivertissement, dans lequel une adaptation dynamique de la fonction de l'application automobile comprend un ou plusieurs des éléments suivants :

• adapter toute fonction de l'application de système d'assistance à la conduite du véhicule (210 A ... 210 N) sur la base de la valeur de prédiction calculée y^;

• adapter toute fonction de l'application de système de conduite autonome du véhicule (210 A ... 210 N) sur la base de la valeur de prédiction calculée $\hat{y}$; et/ou

• adapter toute fonction de l'application de système d'infodivertissement du véhicule (210 A ... 210 N) sur la base de la valeur de prédiction calculée $\hat{y}$; et/ou

• adapter toute fonction appropriée de toute application de système du véhicule (210 A ... 210 N) sur la base de la valeur de prédiction calculée y^.

3. Procédé mis en œuvre par ordinateur (300) pour améliorer l'efficacité et la sécurité dans l'adaptation dynamique d'une application automobile dans un véhicule (210 A ... 210 N), le procédé (300) comprenant les étapes suivantes :

• recevoir et déployer (310), depuis un serveur dorsal (230), un modèle fédéré généralisé $f_{FL}$ dans une première unité de calcul (220 A ... 220 N) du véhicule (210 A ... 210 N) ;

• déployer (320) un modèle personnalisé $f_k$ dans une seconde unité de calcul (230 A ... 230 N) du véhicule (210 A ... 210 N) ;

• décider localement (330), par une unité de décision (240 A ... 240 N) du véhicule (210 A ... 210 N), pour une prédiction $\hat{y}$ de l'application automobile, comment utiliser le modèle fédéré généralisé $f_{FL}$ et le modèle personnalisé $f_k$ ;

• calculer (340), par l'unité de décision (240 A ... 240 N), la prédiction $\hat{y}$ sur la base du modèle décidé ; et

• adapter (350) une fonction de l'application automobile, par le véhicule (210 A ... 210 N), sur la base de la prédiction $\hat{y}$,

dans lequel la décision locale (330), par l'unité de décision (240 A ... 240 N), comment utiliser le modèle fédéré généralisé $f_{FL}$ et le modèle personnalisé $f_k$ pour la prédiction $\hat{y}$, et l'exécution (340) de la prédiction y^comprend les étapes de :

• calculer une erreur de prédiction $\varepsilon_k$ pour le modèle local personnalisé $f_k$ déployé dans la seconde unité de calcul (230 A ... 230 N) ;
• calculer une erreur de prédiction $\varepsilon_{FL}$ pour le modèle fédéré généralisé $f_{FL}$ déployé dans la première unité de calcul (220 A ... 220 N) ;
• calculer une valeur de récompense $\theta$ pour l'erreur de prédiction calculée $\varepsilon_k$ et $\varepsilon_{FL}$ ;
• prendre en compte une performance historique du modèle local personnalisé $f_k$ et du modèle fédéré généralisé $f_{FL}$ ; et
• calculer la prédiction $\hat{y}$ en équilibrant la prédiction du modèle local personnalisé $f_k$ et du modèle fédéré généralisé $f_{FL}$, dans lequel les deux prédictions de modèle du modèle personnalisé et du modèle fédéré généralisé sont pondérées vers la prédiction finale $\hat{y}$, dans lequel la performance historique est incorporée en stockant les valeurs de récompense $\theta$ à chaque instant $t$ dans une fenêtre glissante $O_k$ de taille $U$ pour les derniers $t$ - $U$ instants, où la fenêtre glissante $O_k$ consiste en les $U$ récompenses les plus récentes de $\theta$, et dans lequel à chaque instant $t$, la fenêtre glissante $O_k$ de récompenses est utilisée comme référence pour générer un rapport qui représente la performance des deux modèles sur l'horizon temporel $t$ - $U$, ce rapport définissant ensuite une valeur de pondération adaptative $\alpha$ représentant la performance historique des deux modèles à l'intérieur d'un véhicule respectif et en utilisant la valeur adaptative $\alpha$ pour combiner le modèle fédéré généralisé et le modèle personnalisé local vers la prédiction $\hat{y}$.

4. Procédé (300) selon la revendication 3, dans lequel le véhicule comprend un système d'assistance à la conduite et/ou un système de conduite autonome et/ou un système d'infodivertissement et dans lequel une adaptation dynamique de la fonction de l'application automobile (350) comprend un ou plusieurs des éléments suivants :

• adapter toute fonction de toute application de système d'assistance à la conduite du véhicule (210 A ... 210 N) sur la base de la valeur de prédiction calculée $\hat{y}$ ;
• adapter toute fonction de toute application de système de conduite autonome du véhicule (210 A ... 210 N) sur la base de la valeur de prédiction calculée $\hat{y}$ ; et/ou
• adapter toute fonction de toute application de système d'infodivertissement du véhicule (210 A ... 210 N) sur la base de la valeur de prédiction calculée $\hat{y}$ ; et/ou
• adapter toute fonction appropriée de toute application de système du véhicule (210 A ... 210 N) sur la base de la valeur de prédiction calculée $\hat{y}$.

**Fig. 1**

Federated Learning

Globally Trained Model 132

100

130

140

120 A

110 A

120 N

110 N

• • •

EP 4 123 519 B1

**Fig. 2**

EP 4 123 519 B1

20

300

| | |
|---|---|
| receiving and deploying, from a backend, a generalized federated model in a first computational unit of a vehicle | 310 |
| deploying a personalized model in a second computational unit of the vehicle | 320 |
| locally deciding, by a decision unit of the vehicle, for a prediction of an automotive application, which of the generalized federated model and the personalized model to use | 330 |
| calculating, by the decision unit, the prediction based on the decided model | 340 |
| adapting the automotive application, by the vehicle based on the prediction | 350 |

# Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AHMED USMAN**. A Transaction Classification Model of Federated Learning. *Computer Vision - ECCV 2020: 16th European Conference*, ISBN 978-3-030-58594-5

- **HONGYI ZHANG**. Real-time End-to-End Federated Learning. *45th Annual Computers, Software and Applications Conference (COMPSAC)]*